# EUROPÄISCHE PATENTSCHRIFT

(11) **EP 2 405 527 B1**
(45) Veröffentlichungstag und Bekanntmachung des Hinweises auf die Patenterteilung: **18.06.2014**
(21) Anmeldenummer: 11005467.3
(22) Anmeldetag: 05.07.2011
(51) Int. Cl.: H01M 10/613, H01M 2/20, H01M 10/647, H01M 10/6553, H01M 10/6555, H01M 10/6557

(54) **Akkublock mit einer Kühlvorrichtung**
Battery block with a cooling device
Bloc-batterie doté d'un dispositif de refroidissement

(30) Priorität: 05.07.2010 DE 102010026133
(43) Veröffentlichungstag der Anmeldung: 11.01.2012
(73) Patentinhaber: ads-tec GmbH, 70771 Leinfelden-Echterdingen (DE)
(72) Erfinder: Speidel, thomas, 71706 Markgröningen (DE); Greif, Andreas, 73235 Weilheim a.d. Teck (DE)
(74) Vertreter: Wasmuth, Rolf

(56) Entgegenhaltungen:
- EP-A1- 2 418 717
- WO-A1-2007/063877
- WO-A1-2008/155630
- WO-A1-2009/080151
- WO-A2-2009/091220
- WO-A2-2010/031856
- US-A1- 2009 208 828

## Beschreibung

Die Erfindung betrifft einen Akkublock aus einer Vielzahl einzelner Akkuzellen, die als Flachzellen ausgebildet und in einem gemeinsamen Gehäuse des Akkublocks gehalten sind.

Eine Flachzelle besteht aus einem Foliengehäuse mit darin wechselweise geschichteten Anodenfolien, Separatorfolien und Kathodenfolien. Die Anoden mehrerer Lagen und die Kathoden mehrerer Lagen einer Akkuzelle werden zu Anschlussfahnen verbunden und aus dem Foliengehäuse der Akkuzelle herausgeführt.

Um größere Leistungen bereitzustellen, wie sie z. B. für Elektrofahrzeuge benötigt werden, werden eine Vielzahl von Akkuzellen in einem Akkublock mit einem gemeinsamen Gehäuse zusammengefasst. Zur Erzielung einer ausreichend hohen Ausgangsspannung werden die Akkuzellen elektrisch parallel oder in Reihe geschaltet, wobei wechselweise die Anoden- und Kathodenanschlussfahnen z. B. benachbarter Akkuzellen miteinander zu verbinden sind. Dabei muss gewährleistet sein, dass die elektrischen Verbindungen hochstromfest sind, da insbesondere bei der Verwendung in Kraftfahrzeugen hohe Spitzenströme auftreten können.

Jede Akkuzelle entwickelt sowohl bei der Stromabgabe als auch bei der Stromaufnahme Wärme, die zu einer erhöhten Temperatur des gesamten Akkublocks führt. Um Schädigungen der einzelnen Akkuzellen und/oder des Akkublocks zu vermeiden, muss überschüssige Wärme abgeführt werden.

Die WO 2010/031856 A2 offenbart einen Akkupack aus einer Vielzahl von Flachzellen, deren Anschlussfahnen zur elektrischen Kontaktierung durch Schlitze einer Verbindungsplatine gesteckt werden. Die freien Enden der Anschlussfahnen werden dabei auf ein jeweils zugeordnetes Kontaktelement abgebogen und elektrisch kontaktiert, z. B. festgeschweißt. Unterhalb der Kontaktelemente ist eine Wärmeableitschicht vorgesehen, der auf der Unterseite der Verbindungsplatine liegende Kühlkörper zugeordnet sind. Die Kühlkörper können von einem Kühlmedium durchflossen sein.

Die WO 2009/080151 A1 offenbart einen Akkupack mit einer Wärmeleitplatte, durch deren Schlitze die Anschlussfahnen der Flachzellen geführt sind. Die elektrische Kontaktierung zugeordneter Anschlussfahnen erfolgt durch eine direkte mechanische Verbindung der Anschlussfahnen selbst.

Aus der WO 2007/063877 A1 geht eine Anordnung aus Flachzellen als bekannt hervor, deren miteinander zu kontaktierende Anschlussfahnen auf einem Hohlstab festgeschweißt sind. Durch den Hohlstab ist Kühlluft geführt, um den Hohlstab und die an ihm festgelegten Anschlussfahnen zu temperieren.

Die US 2009/0208828 A1 offenbart einen Akkupack aus Flachzellen, deren Anschlussfahnen aufweisende Ränder durch elastische Dichtleisten gegeneinander abgedichtet sind. Die zu verbindenden Anschlussfahnen werden übereinander abgewinkelt und miteinander verbunden, z. B. verschweißt. Dadurch soll einerseits eine Abdichtung bei Leckagen im Randbereich der Flachzellen gewährleistet sein und aufgrund der Elastizität der Dichtleisten eine Vibrationsdämpfung zwischen den einzelnen Flachzellen möglich werden. Zur Kühlung ist in den elastischen Dichtleisten ein Kanalabschnitt ausgebildet, durch den sowohl der Randbereich der Flachzellen als auch die Ableiter selbst gekühlt werden können.

Der Erfindung liegt die Aufgabe zugrunde, einen Akkublock aus mehreren elektrisch miteinander verbundenen Akkuzellen mit einer derartigen Kühlvorrichtung zu versehen, dass bei guter elektrischer Verbindung der Akkuzellen untereinander eine funktionssichere Temperierung der einzelnen Akkuzellen in dem Gehäuse eines Akkublocks gewährleistet und eine sichere Abfuhr der im Gehäuse des Akkupacks anfallenden Wärme gesichert ist.

Die Aufgabe wird nach den Merkmalen des Anspruchs 1 gelöst.

Die elektrisch miteinander verbundenen Anschlussfahnen der Akkuzellen liegen an dem gemeinsamen Distanzhalter an, über den die elektrische Kontaktierung der Anschlussfahnen erfolgt. Der Distanzhalter ist als Kühlvorrichtung direkt von einem flüssigen Medium gekühlt. Somit wirkt ein Kühlmedium unmittelbar im Bereich der Anschlussfahnen einer Akkuzelle, wobei in diesem Bereich aufgrund der hohen Ströme eine signifikante Wärmeentwicklung gegeben ist. Die Kühlung erfolgt unmittelbar in dem Bereich, in dem die Wärme anfällt.

Der Distanzhalter ist als Hohlkörper ausgebildet, in bzw. durch dessen Hohlraum das Medium geführt ist. Der Hohlkörper bildet somit einen Kanalabschnitt eines Kühlkanals, der im Gehäuse des Akkublocks ausgebildet ist. Das im Hohlraum des Distanzhalters geführte flüssige Medium gewährleistet eine rasche und effiziente Wärmeabfuhr. Der Distanzhalter ist von dem flüssigen Medium direkt gekühlt.

Der Distanzhalter ist Teil eines vorteilhaft geschlossenen Kühlkreislaufs des Akkublocks, in dem das Medium bzw. das Fluid zirkuliert. Die in einem Akkublock miteinander elektrisch kontaktierten Kontaktfahnen liegen an jeweils einem Distanzhalter an, der neben seiner Aufgabe als elektrische Verbindung ebenfalls Teil

des Kühlkreislaufes ist und somit gekühlt wird. Die Kanalabschnitte bildenden Distanzhalter sind Teil eines Kühlkreislaufs im Akkublock, wobei eine elektrische Trennung der in einem Gehäuse eines Akkublocks angeordneten Distanzhalter untereinander vorgesehen ist.

Die Kanalabschnitte bildenden Distanzhalter sind Teil des Kühlkreislaufs im Akkublock und bilden einen gemeinsamen Gitterrahmen. Der Gitterrahmen verleiht der Anordnung aus Flachzellen eine mechanisch stabile Struktur, so dass eine gute Halterung im Gehäuse des Akkupacks möglich wird.

Um eine gute Wärmeabfuhr zu erzielen, ist es vorteilhaft, den Distanzhalter selbst aus einem wärmeleitenden Material auszubilden. Dabei erfolgt vorteilhaft die elektrische Kontaktierung der nebeneinander liegenden Anschlussfahnen über den Distanzhalter selbst, welcher in einer Ausführungsform aus einem elektrisch isolierenden Material besteht und zur elektrischen Kontaktierung der anliegenden Anschlussfahnen zweckmäßig ein Kontaktblech trägt. Über das Kontaktblech ist auch eine entsprechende Wärmeabfuhr gewährleistet.

Jeder Distanzhalter des Akkublocks ist an einem Ende mit einer das Fluid zuführenden Sammelleitung des Akkublocks und an dem anderen Ende mit einer das Fluid abführenden Sammelleitung des Akkublocks verbunden. Dabei bilden die Distanzhalter und die Sammelleitungen einen gemeinsamen Gitterrahmen, der eine mittige Sammelleitung und seitliche Sammelleitungen aufweist. Vorteilhaft ist die Ausbildung derart ausgeführt, dass die mittige Sammelleitung das Fluid zuführt und die seitlichen Sammelleitungen das Fluid in den Kühlkreislauf abführen.

Nach der Erfindung stehen die Akkuzellen selbst trocken, d. h., das Gehäuse, in dem die Akkuflachzellen des Akkublocks gehalten sind, ist nicht mit Kühlflüssigkeit gefüllt. Dies hat den Vorteil, dass die Kühlflüssigkeit nicht durch die Folie der einzelnen Akkuzellen diffundieren kann, wodurch eine Zerstörung oder Leistungseinbuße der Akkuzelle gegeben wäre. Lediglich im Bereich der Anschlussfahnen sind die Akkuzellen gekühlt, wobei die Anschlussfahnen nicht nur ihrem Einsatz entsprechend elektrisch leitend sind, sondern zugleich auch Wärme leiten, so dass eine Kühlung der Anschlussfahnen auch eine Kühlung einer einzelnen Akkuzelle nach innen bewirkt, also eine Kühlung der Akkuzelle selbst. Diese Art der Kühlung ist sehr effektiv, vermeidet Schädigungen der Akkuzellen durch die Kühlflüssigkeit selbst und kühlt insbesondere in dem kritischen Dichtbereich der Foliengehäuse zur Anschlussfahne.

Die erfindungsgemäße Ausbildung der Kühlvorrichtung für eine Akkuzelle in einem Akkublock ist unabhängig von der chemischen Zellstruktur der einzelnen Akkuzelle anwendbar. Insbesondere ist die Verwendung bei Lithium-Ionen-Zellen vorteilhaft.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer, perspektivischer Darstellung einen Akkublock mit einer Kühlvorrichtung,
- Fig. 2: eine schematische, perspektivische Darstellung eines Gitterrahmens der Kühlvorrichtung,
- Fig. 3: in schematischer Darstellung einen Schnitt längs der Linie III-III in Fig. 1,
- Fig. 4: einen Teilschnitt längs der Linie IV-IV in Fig. 2.

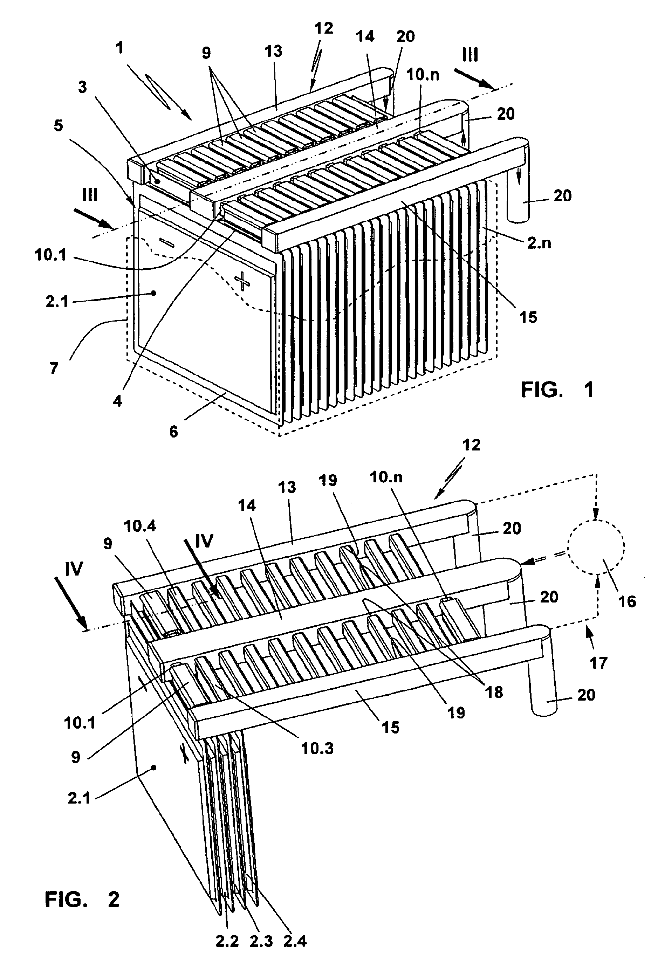

In Fig. 1 ist schematisch ein Akkublock 1 mit einem Akkugehäuse 7 wiedergegeben, der aus einer Vielzahl von einzelnen Akkuzellen 2.1, 2.2, ..., 2.n zusammengesetzt ist. Jede Akkuzelle ist als sogenannte Flachzelle ausgebildet und hat im Wesentlichen rechteckige bis quadratische Form, wie es sich aus der Ansicht der ersten Zelle 2.1 (Figuren 1 und 2) ergibt. Diese Flachzellen oder Pouchzellen genannten Akkuzellen bestehen aus Anodenfolien, Separatorfolien und Kathodenfolien, die im Ausführungsbeispiel wechselweise geschichtet werden und jeweils in ein Foliengehäuse 5 eingeschlagen sind. Die Anoden mehrerer Lagen und die Kathoden mehrerer Lagen sind zu Anschlussfahnen 3, 4 unterschiedlicher Polarität zusammengefasst, die aus dem Gehäuse der einzelnen Akkuzelle, im Ausführungsbeispiel aus dem Foliengehäuse 5 herausgeführt sind. Das Foliengehäuse 5 ist durch einen umlaufenden Rand 6 abgedichtet. Die Anschlussfahnen sind durch den Rand 6 nach außen geführt, wobei die Dichtigkeit im Bereich der Anschlussfahnen 3, 4 zu gewährleisten ist.

Um größere Leistungen bereitzustellen, wie sie z. B. für Elektrofahrzeuge oder dgl. benötigt wird, wird eine Vielzahl von derartigen Akkuzellen 2.1, 2.2, ..., 2.n in dem Akkublock 1 zusammengefasst, wobei die Akkuzellen in das gemeinsame Gehäuse 7 eingestellt und darin gehalten sind.

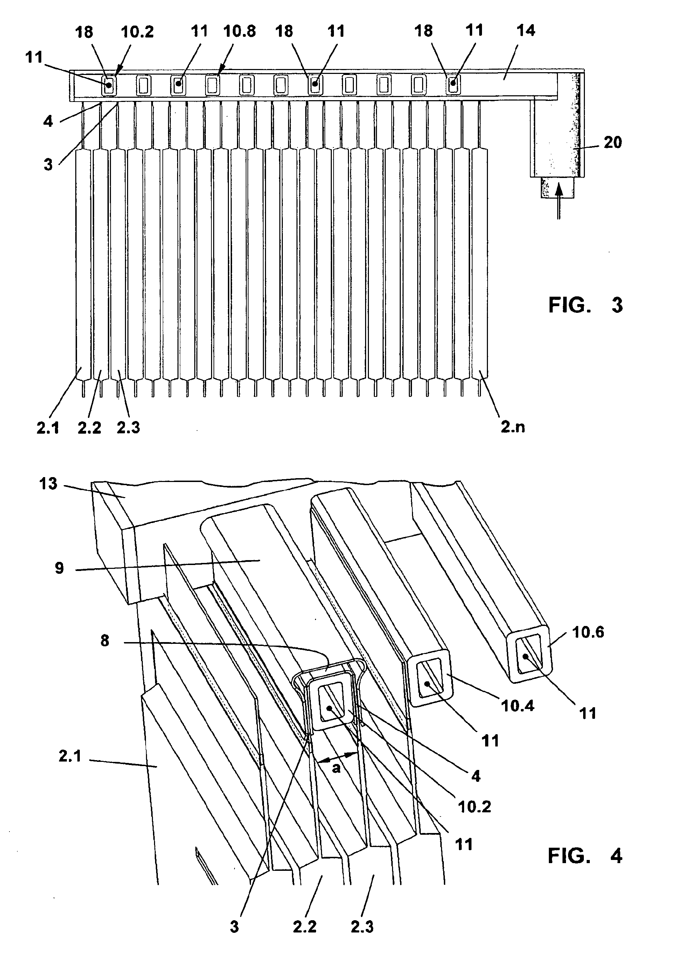

Wie in Fig. 4 dargestellt, liegt die Anschlussfahne 3 einer ersten Akkuflachzelle 2.2 benachbart zu einer Anschlussfahne 4 einer zweiten Akkuzelle 2.3. Sind die Akkuflachzellen 2.1, 2.2, 2.3, ..., 2.n parallel geschaltet, haben die elektrisch miteinander zu verbindenden Anschlussfahnen 3 und 4 gleiche Polarität; sind die Akkuflachzellen 2.1, 2.2, 2.3, ... in Reihe geschaltet, haben die elektrisch miteinander zu verbindenden Anschlussfahnen 3 und 4 unterschiedliche Polarität.

Die Anschlussfahne 3 der einen Akkuzelle 2.2 liegt der Anschlussfahne 4 einer anderen, zweckmäßig benachbarten Akkuzelle 2.3 mit Abstand a gegenüber. Zwischen den Anschlussfahnen 3 und 4 ist zur elektrischen Kontaktierung ein Distanzhalter 10.2 angeordnet, an dem die Anschlussfahnen 3 und 4 liegen. Im gezeigten Ausführungsbeispiel besteht der Distanzhalter 10.2 aus einem elektrisch isolierenden Material. Zur elektrischen Kontaktierung der am Distanzhalter anliegenden Anschlussfahnen 3 und 4 trägt der Distanzhalter 10.2 ein Kontaktblech 8, über welches die Anschlussfahnen 3 und 4 miteinander elektrisch leitend verbunden sind. Der Distanzhalter selbst kann auch aus einem elektrisch leitenden Material bestehen; dann aber ist eine elektrische Trennung der in einem Gehäuse 7 eines Akkublocks 1 angeordneten Distanzhalter untereinander notwendig und ein elektrisch isolierendes Kühlmedium zu verwenden. Ein elektrisch isolierendes Kühlmedium kann auch allgemein vorteilhaft sein.

Zur Erzielung einer guten elektrisch leitenden Anlage am Kontaktblech 8 werden die Kontaktfahnen 3 und 4 von einer Verbindungsklammer 9 übergriffen. Die Verbindungsklammer 9 ist im Schnitt etwa U-förmig ausgebildet und drückt mit ihren Schenkeln die Anschlussfahnen 3 und 4 mit einer definierten Klemmkraft an das Kontaktblech 8 des Distanzhalters 10 an. Zweckmäßig ist die Verbindungsklammer 9 aus einem elektrisch leitenden Material gefertigt, so dass die elektrisch leitende Verbindung zwischen den Anschlussfahnen 3 und 4 nicht nur über das von dem Distanzhalter 10.2 getragene Kontaktblech 8 erfolgt, sondern auch über die Verbindungsklammer 9. Eine gute elektrische Kontaktierung, die auch hohe Ströme leitet, ist dadurch gewährleistet.

Der Distanzhalter 10.2 ist von einem Medium gekühlt, welches eine Flüssigkeit ist. Der von einem derartigen Fluid gekühlte Distanzhalter ist gemäß dem Ausführungsbeispiel als Hohlkörper ausgebildet, dessen Hohlraum 11 das Fluid führt. Um eine gute Wärmeableitung zu gewährleisten, ist der Distanzhalter aus einem gut wärmeleitenden Material gefertigt, damit ein stetiger Wärmeübergang aus dem Kontaktbereich der Anschlussfahnen 3 und 4 zum Kühlmedium erzielt ist.

Wie die Figuren 1 und 3 zeigen, liegen alle z. B. paarweise miteinander elektrisch kontaktierten Kontaktfahnen eines Akkublocks 1 an jeweils einem gekühlten Distanzhalter an, der einen Kanalabschnitt eines Kühlkanals im Akkublock bildet. Im Gehäuse 5 des gezeigten Akkublocks 1 sind insgesamt 23 Distanzhalter 10.1 bis 10.n (n = 23) vorgesehen, womit 24 Akkuzellen 2.1, 2.2, 2.n (n = 24) elektrisch zu einem gemeinsamen Akkublock 1 zusammengefasst sind. Die Kanalabschnitte bildenden Distanzhalter 10.1 bis 10.n sind Teil eines Kühlkanals oder Kühlkreislaufs 17 im Akkublock 1, der im Ausführungsbeispiel als gemeinsamer Gitterrahmen 12 gestaltet ist, der ferner die Sammelleitungen 13, 14, 15 umfassen kann, die Teil eines insbesondere geschlossenen Kühlkreislaufes 17 bilden. Der Kühlkreislauf 17 eines derartigen Akkublocks 1 ist in Fig. 2 schematisch wiedergegeben. Im Ausführungsbeispiel führt die mittlere Sammelleitung 14 - zweckmäßig durch eine Pumpe 16 unterstützt - das Kühlfluid, z. B. eine Flüssigkeit, zu. Jeder Distanzhalter im Akkublock bildet einen Kühlkanalabschnitt, der an einem Ende 18 mit einer das Fluid zuführenden Leitung, z. B. der Sammelleitung 14 des Akkublocks und an dem anderen Ende 19 mit einer das Fluid abführenden Leitung, z. B. der Sammelleitung 13, 15 des Akkublocks verbunden ist. Die beiden abführenden Sammelleitungen 13 und 15 bilden die Längskanten des Gitterrahmens 12, während die zuführende Sammelleitung 14 einen mittleren Steg des Gitterrahmens 12 bildet. Die Sammelleitungen 13, 14 und 15 sind über die Außenkontur des Gehäuses 7 verlängert, so dass an deren Stutzen 20 der Kühlkreislauf 17 angeschlossen werden kann.

Im Ausführungsbeispiel ist der Kühlkreislauf 17 am Beispiel eines Akkublocks 1 gezeigt; der Kühlkreislauf 17 kann gleichzeitig mehrere Akkublocks mit Kühlflüssigkeit versorgen, wobei die Kühlflüssigkeitskreisläufe hintereinander oder parallel geschaltet sein können.

Durch die Kühlvorrichtung in einem Akkublock 1, in dessen Gehäuse eine Anordnung aus mehreren Akkuzellen 2.1, 2.2, ..., 2.n gehalten ist, wobei die Anschlussfahne 3 einer ersten Akkuzelle 2.2 mit der Anschlussfahne 4 einer anderen, z. B. benachbarten Akkuzelle 2.3 elektrisch leitend verbunden ist, wobei die Anschlussfahne 3 der einen Zelle 2.2 der Anschlussfahne 4 der anderen, benachbarten Zelle 2.3 mit Abstand a gegenüberliegt, und zwischen den Anschlussfahnen 3, 4 ein Distanzhalter 10.2 eingesetzt ist, an dem die Anschlussfahnen 3, 4 anliegen und der Distanzhalter 10.2 von einem Medium gekühlt ist, kann eine effiziente Wärmeabfuhr und bei Bedarf auch eine Wärmezufuhr in einen Akkublock und dessen einzelnen Zellen erfolgen.

## Patentansprüche

1. Akkublock aus einer Vielzahl einzelner Akkuzellen (2.1, 2.2, ..., 2.n), die als Flachzellen ausgebildet, wobei die Anoden mehrerer Lagen sowie die Kathoden mehrerer Lagen einer Akkuzelle zu einer positiven und einer negativen Anschlussfahne (3, 4) zusammengefasst und aus dem Gehäuse (5) der Akkuzelle herausgeführt sind, wobei eine Anschlussfahne (3) einer ersten Akkuzelle (2.2) mit einer Anschlussfahne (4) einer zweiten Akkuzelle (2.3) elektrisch leitend verbunden ist, wobei die Anschlussfahne (3) der einen Akkuzelle (2.2) der Anschlussfahne (4) der anderen Akkuzelle (2.3) mit Abstand (a) gegenüberliegt, und zwischen den Anschlussfahnen (3, 4) der Akkuzellen ein Distanzhalter (10.1, 10.2;...,10.n) eingesetzt ist, an dem die Anschlussfahnen (3, 4) anliegen und die elektrische Kontaktierung der nebeneinander liegenden Anschlussfahnen (3, 4) über den Distanzhalter (10.1, 10.2, ..., 10.n) erfolgt, wobei der Distanzhalter (10.2) als Kühlvorrichtung von einem Fluid gekühlt ist, und der Distanzhalter (10.1, 10.2, ..., 10.n) ein Hohlkörper ist, durch dessen Hohlraum (11) das Fluid geführt ist, **dadurch gekennzeichnet, dass** die Vielzahl der Akkuzellen (2.1, 2.2, ..., 2.n) in einem gemeinsamen Gehäuse (7) des Akkublocks (1) eingestellt und darin gehalten sind, dass die in einem Akkublock (1) miteinander elektrisch kontaktierten Anschlussfahnen (3, 4) an jeweils einem gekühlten Distanzhalter (10.1, 10.2,....,10.n) anliegen, und die Distanzhalter (10.1, 10.2,......,10.n) Teil eines Kühlkreislaufs (17) im Akkublock (1) sind und Teil eines gemeinsamen Gitterrahmens (12) bilden, wobei ein flüssiges Fluid im Kühlkreislauf (17) des Akkublocks (1) zirkuliert.

2. Akkublock nach Anspruch 1,
**dadurch gekennzeichnet, dass** der Distanzhalter (10.1, 10.2 bis 10.n) aus einem wärmeleitenden Material besteht.

3. Akkublock nach Anspruch 1,
**dadurch gekennzeichnet, dass** der Distanzhalter (10.1 bis 10.n) aus einem elektrisch isolierenden Material besteht und zur elektrischen Kontaktierung der anliegenden Anschlussfahnen (3, 4) ein Kontaktblech (8) trägt.

4. Akkublock nach einem der Ansprüche 1 bis 3,
**dadurch gekennzeichnet, dass** jeder Distanzhalter (10.1, 10.2, ..., 10.n) des Akkublocks (1) an einem Ende (18) mit einer das Medium zuführenden Sammelleitung (14) des Akkublocks (1) und an dem anderen Ende (19) mit einer das Medium abführenden Sammelleitung (13, 15) des Akkublocks (1) verbunden ist.

5. Akkublock nach Anspruch 4,
**dadurch gekennzeichnet, dass** die Distanzhalter (10.1, 10.2, ..., 10.n) und die Sammelleitungen (13, 14, 15) den gemeinsamen Gitterrahmen (12) bilden.

6. Akkublock nach Anspruch 5,
**dadurch gekennzeichnet, dass** der Gitterrahmen (12) eine mittige, das Medium zuführende Sammelleitung (14) und seitliche, das Medium abführenden Sammelleitungen (13, 15) aufweist.

## Claims

1. Battery pack comprising a plurality of individual battery cells (2.1, 2.2, ..., 2.n), which are formed as flat cells, wherein the anodes of a plurality of layers and the cathodes of a plurality of layers of a battery cell are put together to form a positive and a negative connecting terminal (3, 4) and removed from the housing (5) of the battery cell, wherein a connecting terminal (3) of a first battery cell (2.2) is electrically conductively connected to a connecting terminal (4) of a second battery cell (2.3), wherein the connecting terminal (3) of one battery cell (2.2) lies opposite the connecting terminal (4) of the other battery cell (2.3) at a distance (a), and a spacer (10.1, 10.2, ..., 10.n) is inserted between the connecting terminals (3, 4) of the battery cells, on which spacer (10.1, 10.2, ..., 10.n) the connecting terminals (3, 4) lie, and the electrical contacting of the connecting terminals (3, 4) lying one beside the other is realised via the spacer (10.1, 10.2, ..., 10.n), wherein the spacer (10.2) is cooled as a cooling device by a fluid, and the spacer (10.1, 10.2, ..., 10.n) is a hollow body, through the hollow chamber (11) of which the fluid is conveyed, **characterised in that** the plurality of battery cells (2.1, 2.2, ..., 2.n) is set and held in a common housing (7) of the battery pack (1), the connecting terminals (3, 4) electrically contacted with each other in a battery pack (1) respectively lie against a cooled spacer (10.1, 10.2, ..., 10.n), and the spacers (10.1, 10.2, ..., 10.n) form part of a cooling circuit (17) in the battery pack (1) and part of a common grid frame (12), wherein a fluid in liquid form circulates in the cooling circuit (17) of the battery pack (1).

2. Battery pack according to claim 1,
**characterised in that** the spacer (10.1, 10.2 to 10.n) is made of a heat conducting material.

3. Battery pack according to claim 1,
**characterised in that** the spacer (10.1 to 10.n) is made of an electrically insulating material and supports a contact plate (8) for electrical contacting of the adjacent connecting terminals (3, 4).

4. Battery pack according to one of the claims 1 to 3,
**characterised in that** each spacer (10.1, 10.2, ..., 10.n) of the battery pack (1) is connected at one end (18) to a collecting line (14) of the battery pack (1) supplying the medium and at the other end (19) to a collecting line (13, 15) of the battery pack (1) removing the medium.

5. Battery pack according to claim 4,
**characterised in that** the spacers (10.1, 10.2, ..., 10.n) and the collecting lines (13, 14, 15) form the common grid frame (12).

6. Battery pack according to claim 5,
**characterised in that** the grid frame (12) has a central collecting line (14) supplying the medium and lateral collecting lines (13, 15) removing the medium.

## Revendications

1. Bloc-batterie avec plusieurs cellules de batterie individuelles (2.1, 2.2, ..., 2.n) qui sont conçues comme des cellules plates, étant précisé que les anodes de plusieurs couches et les cathodes de plusieurs couches d'une cellule de batterie sont réunies en une patte de connexion positive et une patte de connexion négative (3, 4) et sortent du boîtier (5) de l'élément de batterie, étant précisé qu'une patte de connexion (3) d'une première cellule (2.2) est reliée de manière conductrice d'électricité à une patte de connexion (4) d'une deuxième cellule (2.3), étant précisé que la patte de connexion (3) d'une cellule (2.2) se trouve en face de la patte de connexion (4) de l'autre cellule de batterie (2.3), avec un écartement (a), et qu'il est prévu entre les pattes de connexion (3, 4) des éléments de batterie un élément d'écartement (10.1, 10.2, ..., 10.n) au niveau duquel les pattes de connexion (3, 4) sont appliquées et le contact électrique des pattes de connexion (3, 4) disposées côte à côte se fait par l'intermédiaire de l'élément d'écartement (10.1, 10.2, ..., 10.n), étant précisé que l'élément d'écartement (10.2) est refroidi, comme dispositif de refroidissement, par un fluide, et qu'il s'agit d'un corps creux dont la cavité (11) est traversée par le fluide,
**caractérisé en ce que** lesdites cellules de batterie (2.1, 2.2, ..., 2.n) sont placées et fixées dans un boîtier commun (7) du bloc-batterie (1), **en ce que** les pattes de connexion (3, 4) en contact électrique dans un bloc-batterie (1) sont appliquées chacune contre un élément d'écartement (10.1, 10.2, ..., 10.n) refroidi, et les éléments d'écartement (10.1, 10.2, ..., 10.n) font partie d'un circuit de refroidissement (17) dans le bloc-batterie (1) et forment un élément d'un châssis à grille commun (12), étant précisé qu'un fluide liquide circule dans le circuit de refroidissement (17) du bloc-batterie (1).

2. Bloc-batterie selon la revendication 1,
**caractérisé en ce que** l'élément d'écartement (10.1, 10.2 à 10.n) se compose d'un matériau conducteur de chaleur.

3. Bloc-batterie selon la revendication 1,
**caractérisé en ce que** l'élément d'écartement (10.1 à 10.n) se compose d'un matériau isolant électriquement et, pour le contact électrique des pattes de connexion (3, 4) appliquées, porte une tôle de contact (8).

4. Bloc-batterie selon l'une des revendications 1 à 3,
**caractérisé en ce que** chaque élément d'écartement (10.1, 10.2, ..., 10.n) du bloc-batterie (1) est relié, à une extrémité (18), à une conduite collectrice (14) du bloc-batterie (1) qui amène le fluide, et, à l'autre extrémité (19), à une conduite collectrice (13, 15) du bloc-batterie (1) qui évacue le fluide.

5. Bloc-batterie selon la revendication 4,
**caractérisé en ce que** les éléments d'écartement (10.1, 10.2, ..., 10.n) et les conduites collectrices (13, 14, 15) forment le châssis à grille commun (12).

6. Bloc-batterie selon la revendication 5,
**caractérisé en ce que** le châssis à grille (12) présente une conduite collectrice centrale (14) qui amène le fluide, et des conduites conductrices latérales (13, 15) qui évacuent le fluide.
